# EUROPEAN PATENT SPECIFICATION

(11) **EP 2 840 624 B1**
(45) Date of publication and mention of the grant of the patent: **17.01.2018**
(21) Application number: 14181515.9
(22) Date of filing: 20.08.2014
(51) Int. Cl.: H01M 2/06, H01M 2/02

(54) **Pouch type rechargeable battery**
Beutelförmige wiederaufladbare Batterie
Batterie rechargeable de type pochette

(30) Priority: 22.08.2013 KR 20130099715
(43) Date of publication of application: 25.02.2015
(73) Proprietor: Samsung SDI Co., Ltd., Yongin-si, Gyeonggi-do (KR)
(72) Inventor: Jo, Doo-Hyun, Yongin-si, Gyeonggi-do (KR); Lee, Yong-Beom, Yongin-si, Gyeonggi-do (KR); Ji, Hyeong-Min, Yongin-si, Gyeonggi-do (KR); Kim, Young-Woo, Yongin-si, Gyeonggi-do (KR); Jung, Hyo-Chan, Yongin-si, Gyeonggi-do (KR)
(74) Representative: Gulde & Partner

(56) References cited:
- EP-A1- 2 579 354
- US-A1- 2011 129 728
- US-A1- 2013 149 599
- US-A1- 2013 149 601

## Description

### BACKGROUND

### Field

The described technology relates generally to a pouch type rechargeable battery with a sealing portion of a pouch and a terrace portion insulated by an insulation tape.

### Description of the Related Technology

With the development of mobile devices, demand increased for rechargeable batteries as an energy source. In addition, high-energy, down-sized, light, and slim mobile devices are desired. For example, a rechargeable battery is flatly formed using a polymer solid electrolyte film. As the rechargeable battery, there is a pouch-type battery effectively implementing the slimness of the battery.

The pouch type rechargeable battery typically has a pouch sealing portion that is insulated by an insulation tape and adhered to a side of a cell body. Also, the pouch type rechargeable battery forms a terrace from a side of a lead tab draw out of the cell body to the sealing portion of the pouch. The lead tab is insulated from the terrace by interposing a tab seal. Rechargeable batteries with a pouch are described in US Application Publication 2013/0149599 A1 and US Application Publication 2013/0149601 A1. EP 2 579 354 A1 concerns a thin battery.

The above information disclosed in this Background section is only for enhancement of understanding of the background of the described technology and therefore it may contain information that does not form the prior art that is already known in this country to a person of ordinary skill in the art.

### SUMMARY OF CERTAIN INVENTIVE ASPECTS

The present invention provides a pouch type rechargeable battery with an insulated terrace side end (a metal portion) and tightly adhering an insulation tape by adhering the insulation tape while absorbing a position tolerance of a lead tab (or a tab seal) on a terrace.

A pouch type rechargeable battery according to the invention includes: an electrode assembly; a pouch forming a sealing portion at a side surface of a cell body receiving the electrode assembly by sealing an outer portion thereof, forming a terrace at the other side surface of the cell body, and sealing a lead tab connected to the electrode assembly by a tab seal to draw it out to the terrace; and an insulation tape configured to insulate the sealing portion to be adhered to the cell body and insulating the terrace, wherein the insulation tape includes a cutting portion corresponding to one side of the tab seal and adhered to the tab seal. One side of one of the tab seals is received in the cutting portion.

The terrace may include a bottom portion connected to a bottom of the cell body, and a side wall portion bent at the bottom portion and connected to the sealing portion adhered to a side surface of the cell body.

The insulation tape may also include a first portion insulating a side end of the sealing portion and a side end of the side wall portion, and a second portion connected vertically to the first portion and insulating the side end of the bottom portion and the other side end of the side wall portion.

A first center line of the first portion may accord with the side end of the sealing portion, a second center line of the second portion may accord with the side end of the bottom portion, and a cross point where the first center line and the second center line cross with a vertex of the side wall portion.

The cutting portion may be cut according to the second center line at one side of the second center line.

A length of the cutting portion may be about 1 to 2 times a position tolerance range of the tab seal.

The position tolerance range of the tab seal may be about ±0.7 mm, and the length of the cutting portion may be about 1 to 1.4 mm.

The insulation tape may be firstly bent to insulate the side end of the sealing portion and one side end of the side wall portion by the first portion, and may be secondly bent to insulate the side end of the bottom portion and the other side end of the side wall portion by the second portion.

The second portion may dispose the cutting portion by corresponding to the tab seal, and both sides of the cutting portion are adhered to both surfaces of the tab seal.

The end of the cutting portion may be positioned between the lead tab and the tab seal.

As described above, according to an embodiment, the position tolerance of the lead tab (or the tab seal) is absorbed by the cutting portion of the insulation tape on the terrace and adhering the insulation tape such that the terrace side end (the metal portion) may be insulated and the insulation tape may be tightly adhered.

### BRIEF DESCRIPTION OF THE DRAWINGS

FIG. 1 is a perspective view of a pouch type rechargeable battery according to an exemplary embodiment.
FIG. 2 is an exploded perspective view of a pouch and an electrode assembly that are separated from the pouch type rechargeable battery of FIG. 1.
FIG. 3 is a perspective view of an arrangement of a rechargeable battery and an insulation tape before adhering the insulation tape to the pouch type rechargeable battery of FIG. 1.
FIG. 4 is a perspective view of a state in which an insulation tape is firstly adhered to the pouch type rechargeable battery of FIG. 3.
FIG. 5 is a top plan view of a portion of FIG. 4.
FIG. 6 is a perspective view of a in which that an insulation tape is firstly bent in the pouch type rechargeable battery of FIG. 4 and is secondly adhered.
FIG. 7 is a top plan view of a portion of FIG. 6.
FIG. 8 is a perspective view of a state in which an insulation tape is secondly bent in the pouch type rechargeable battery of FIG. 6 and is thirdly adhered.
FIG. 9 is a top plan view of a portion of FIG. 8.

### DETAILED DESCRIPTION OF EXEMPLARY EMBODIMENTS

The present invention will be described more fully hereinafter with reference to the accompanying drawings, in which exemplary embodiments of the invention are shown. As those skilled in the art would realize, the described embodiments may be modified in various ways, without departing from the scope of the present invention. The drawings and description are to be regarded as illustrative in nature and not restrictive. Like reference numerals generally designate like elements throughout the specification.

In pouch type rechargeable batteries, an insulation tape typically insulates a side end of the terrace to prevent a short circuit of the side end (an exposed portion of a metal) of the terrace. The lead tab and the tab seal have a position tolerance on the terrace. Accordingly, the side end of the terrace may be exposed between the sides of the insulation tape and the lead tab (or the tab seal) insulating the side end of the terrace, and adhesion performance of the insulation tape may be deteriorated by interference of the insulation tape and the tab seal.

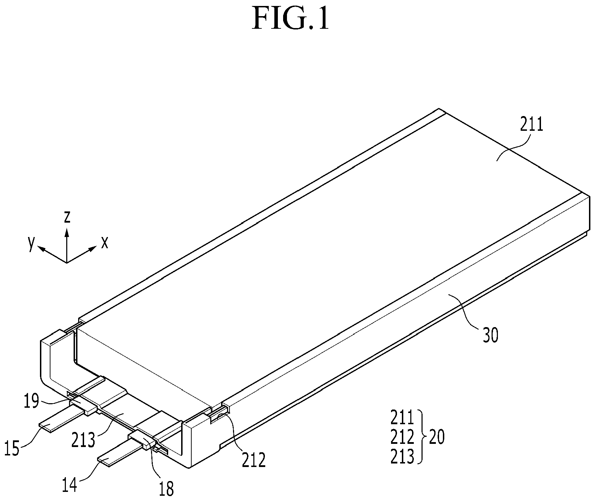

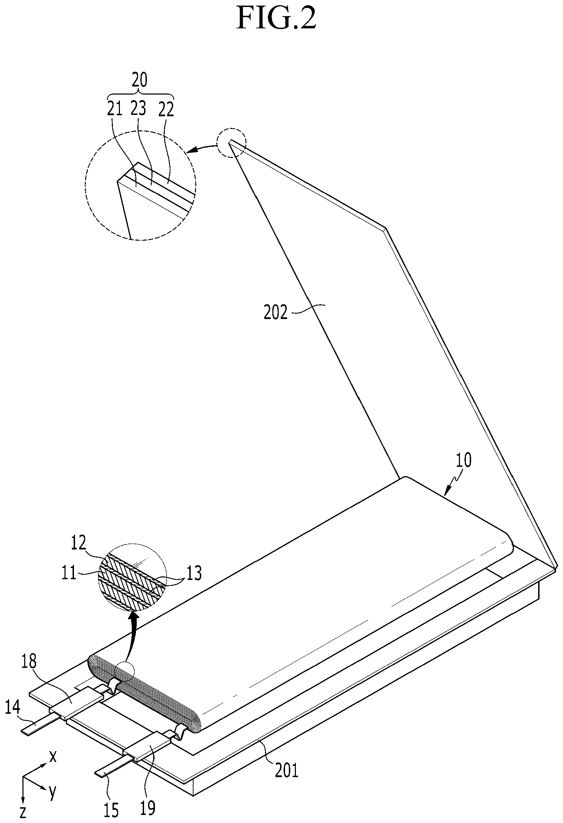

FIG. 1 is a perspective view of a pouch type rechargeable battery according to an embodiment, and FIG. 2 is an exploded perspective view in which a pouch and an electrode assembly are separated from the pouch type rechargeable battery of FIG. 1.

Referring to FIG. 1 and FIG. 2, a pouch type rechargeable battery according to an embodiment includes an electrode assembly 10 performing a charging and discharging operation, a pouch 20 receiving and sealing the electrode assembly 10 therein, and an insulation tape 30 insulating the exterior of the pouch 20.

The electrode assembly 10 is formed in a jelly-roll shape by winding a first electrode (for convenience, referred to as a positive electrode) 11 and a second electrode (for convenience, referred to as a negative electrode) 12, interposing a separator 13 therebetween. The separator 13 may be made of a polymer solid electrolyte film through which lithium ions may pass.

The positive electrode 11 includes a coated region obtained by coating an active material on a thin film current collector, and an uncoated region set as a collector that is exposed because of not being coated with the active material. A first lead tab (for convenience, referred to as a positive electrode lead tab) 14 is connected to the uncoated region of the positive electrode 11 to extend therefrom.

The negative electrode 12 includes a coated region obtained by coating an active material that is different from that of the positive electrode 11 on a thin film current collector, and an uncoated region set as a collector that is exposed because of not being coated with the active material. A second lead tab (for convenience, referred to as a negative electrode lead tab) 15 is connected to the uncoated region of the negative electrode 12 from the opposite side of the positive lead tab 14 to extend therefrom.

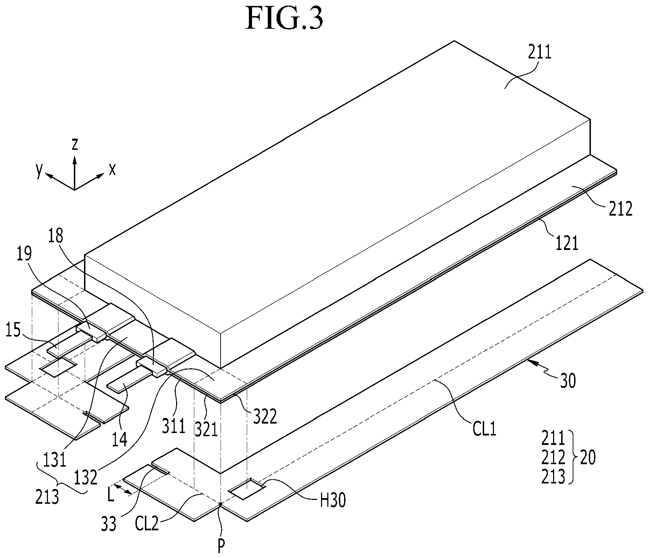

FIG. 3 is a perspective view of an arrangement of a rechargeable battery and an insulation tape before adhering the insulation tape to the pouch type rechargeable battery of FIG. 1. Referring to FIG. 3, the pouch 20 includes a cell body 211, a sealing portion 212, and a terrace 213 that are predetermined according to position.

The electrode assembly 10 is substantially formed of a plane plate structure with a cuboidal shape such that the cell body 211 receiving the electrode assembly 10 is substantially formed of a plane plate structure of the cuboidal shape. The rechargeable battery encloses the electrode assembly 10 by the pouch 20 thereby entirely forming a plane plate structure of the cuboidal shape.

The sealing portion 212 is formed at a side surface (for example, a second side surface of a long edge) of the cell body 211 to be adhered to the side surface of the cell body 211. The terrace 213 is formed at the other side surface (for example, a first side surface of a short edge) of the cell body 211 to draw out the positive electrode lead tab 14 and the negative electrode lead tab 15 connected to the electrode assembly 10 to the outside.

The positive electrode lead tab 14 and the negative electrode lead tab 15 are electrically insulated from the terrace 213 by respectively interposing tab seals 18 and 19. The tab seals 18 and 19 are protruded further than the terrace 213 (in the x-axis direction) and may protrude in a width direction (the y-axis direction) of the positive and negative electrode lead tabs 14 and 15.

The pouch 20 may be formed in a multi-layered sheet structure that receives and seals the electrode assembly 10. For example, in a deposition direction, the pouch 20 includes a polymer sheet 21, a metal sheet 23, and a nylon sheet 22.

The polymer sheet 21 constitutes an inner surface of the pouch 20 and performs insulation and thermal fusion-bonding functions, and the nylon sheet 22 constitutes an outer surface of the pouch 20 and performs a protection function. The nylon sheet 22 may be replaced by a PET (polyethylene terephthalate) sheet, a nylon sheet, or a PET-nylon composite sheet. The metal sheet 23 provides mechanical strength and may be formed of an aluminum sheet as one example. The insulation tape 30 is adhered to the sealing portion 212 and the terrace portion 213 of the pouch 20 to insulate the side end of the metal sheet 23.

Also, in an aspect of receiving the electrode assembly 10, the pouch 20 includes a first exterior member 201 and a second exterior member 202. The first and second exterior members 201 and 202 may be formed of the polymer sheet 21, the nylon sheet 22, and the metal sheet 23 having the same structure.

The first exterior member 201 is formed of a concave structure to receive the electrode assembly 10, and the second exterior member 201 is formed of a plane structure to cover the electrode assembly 10. Also, the first and second exterior members 201 and 202 are thermal-fused at the outside receiving the electrode assembly 10 thereby forming the sealing portion 212.

The sealing portion 212 is formed by thermal-fusing the first exterior member 201 that is bent according to the electrode assembly 10 to a plane bottom surface of the second exterior member 202. The sealing portion 212 is bent from both sides of the y-axis direction into the z-axis direction and is adhered to a side surface of the cell body 211 such that the terrace 213 is formed at one side of the x-axis direction.

The insulation tape 30 insulates the sealing portion 212 and is adhered to the side surface of the cell body 211. Also, the insulation tape 30 insulates one side of the terrace 213 and the tab seals 18 and 19.

For convenience, one side of the tab seal 18 will be described. The insulation tape 30 includes a cutting portion 33 corresponding to one side of the tab seal 18, thereby being connected to the terrace 213 and the tab seal 18. Accordingly, a side end 311 of a bottom portion 131 may be insulated by the insulation tape 30 at one side of the tab seal 18.

For example, the terrace 213 includes the bottom portion 131 connected to a bottom of the cell body 211 and a side wall portion 132 bent from the bottom portion 131 and connected to the sealing portion 212 adhered to the side surface of the cell body 211. A portion of the side end 311 of the terrace 213 is included in the bottom portion 131 and the remaining portion 321 is included in the side wall portion 132.

Accordingly, the insulation tape 30 insulates the side end 311 of the bottom portion 131 and both side ends 321 and 322 of the side wall portion 132 in the side direction of the positive and negative electrode lead tabs 14 and 15. For example, both side ends 321 and 322 may be formed to be perpendicular to each other.

For example, the insulation tape 30 includes a first portion 31 adhered to the sealing portion 212 for insulating and a second portion 32 vertically connected to the first portion 31 and adhered to both surfaces of the bottom portion 131 for insulating.

The first portion 31 insulates both surfaces at the sealing portion 212, thereby insulating the side end 121 of the sealing portion 212 and the side end 322 of the side wall portion 132. A first center line CL1 of the first portion 31 accords with the side end 121 of the sealing portion 212 and the side end 322 of the side wall portion 132.

The second portion 32 insulates both surfaces at the bottom portion 131 thereby insulating the side end 311 of the bottom portion 131 and the side end 321 of the side wall portion 132. A second center line CL2 of the second portion 32 accords with the side end 311 of the bottom portion 131 and the side end 321 of the side wall portion 132.

A cross point P of the first center line CL1 and the second center line CL2 accords with a vertex of the side wall portion 132. The cross point P accords with a point where the side end 321 and the side end 322 of the side wall portion 132 are connected.

Accordingly, in the terrace 213, both side ends 322 and 321 of the side wall portion 132 are insulated by the first and second portions 31 and 32 of the insulation tape 30. The first center line CL1 accords with a center of a short check hole H30. The side end 121 of the sealing portion 212 and the side end 322 of the side wall portion 132 are partially exposed through the short check hole H30 such that a short check is possible.

If the electrode assembly 10 is installed in the pouch 20 and is sealed, the positive and negative electrode lead tabs 14 and 15 may have a position tolerance at the bottom portion 231. The positive and negative electrode lead tabs 14 and 15 are insulated by the tab seals 18 and 19 and are drawn out such that the tab seals 18 and 19 may have substantial position tolerance at the bottom portion 231.

A distance determined between the positive and negative electrode lead tabs 14 and 15 and the side wall portion 232 includes the tolerance. Substantially, a distance determined between the tab seal 18 and 19 and the side wall portion 232 includes the tolerance.

To absorb the tolerance, the insulation tape 30 includes the cutting portion 33. For example, the cutting portion 33 is formed by cutting the second portion 32 according to the second center line CL2 at one side on the second center line CL2.

One side of the tab seal 18 is received to the cutting portion 33, and the opened second portion 32 is adhered to both surfaces of the tab sealing member 18. One side of the second portion 32 is opened at the cutting portion 33 such that one side may deviate from the tab seal 18 and may be again adhered on the tab seal 18. Accordingly, between the tab seal 18 and the side wall portion 132, the side end 311 of the bottom portion 131 may be insulated by the second portion 32 of the insulation tape 30.

A length L of the cutting portion 33 may be determined as 1 to 2 times the position tolerance range of the positive and negative electrode lead tabs 14 and 15. The second portion 32 of the insulation tape 30 has the cutting portion 33 corresponding to a minimum tolerance range such that the side end 311 of the bottom portion 131 may be sufficiently insulated between the tab seal 18 and the side wall portion 132.

For example, it may be predetermined that the position tolerance range of the tab seal 18 and 19 is about ±0.7 mm, and the length L of the cutting portion 33 is from about 1 to about 1.4 mm. The second portion 32 may correspond to the cutting portion 33 of the length L of 1 and the minimum tolerance (for example, about -7 mm), and the cutting portion 33 of the length L of about 1.4 mm and the maximum tolerance (for example, about +7 mm).

The second portion 32 is adhered to both surfaces of the tab seal 18 in the entire range of the tolerance, thereby insulating the side end 311 of the bottom portion 131 between the tab seal 18 and the side wall portion 132. The end of the cutting portion 33 is positioned between the positive electrode lead tab 14 and the tab seal 18.

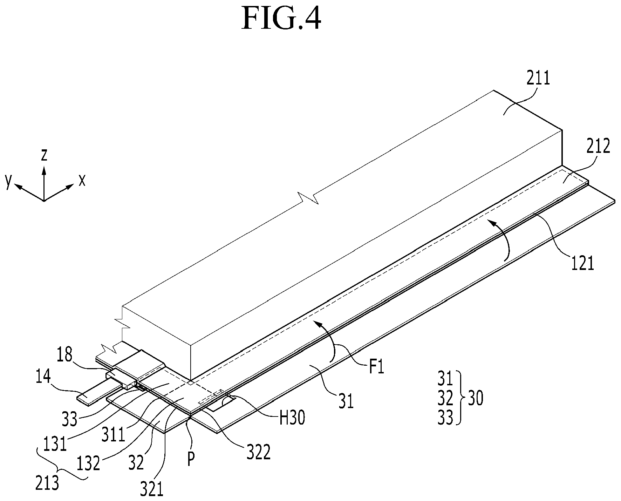

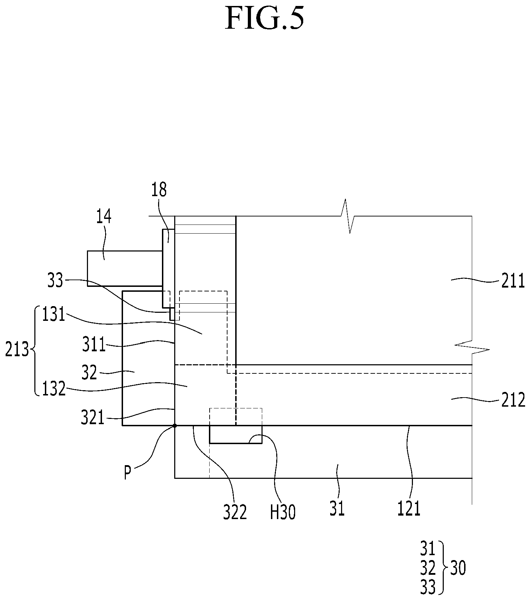

Next, referring to FIG. 4 to FIG. 9, a process of forming the insulation structure of the pouch 20 by adhering and bending the insulation tape 30 is described. FIG. 4 is a perspective view of a state in which an insulation tape is firstly adhered to the pouch type rechargeable battery of FIG. 3, and FIG. 5 is a top plan view of a portion of FIG. 4.

Referring to FIG. 4 and FIG. 5, the insulation tape 30 is adhered to one surface (a lower surface) of the sealing portion 212 and the terrace 213 of the pouch 20. The inside of the first center line CL1 of the first portion 31 and the inside of the second center line CL2 of the second portion 32 are respectively adhered to the sealing portion 212 and the terrace 213.

The first portion 31 of the insulation tape 30 is adhered to one surface (a lower surface) of the sealing portion 212 and one surface (a lower surface) of the side wall portion 132, and the vertex of the side wall portion 132 accords with the cross point P. Accordingly, the first portion 31 is disposed in a state of being capable of insulating the side end 121 of the sealing portion 212 and the side end 322 of the side wall portion 132.

The second portion 32 of the insulation tape 30 is adhered to one surface of the bottom portion 131 and one surface of the side wall portion 132, and a vertex of the side wall portion 132 accords with the cross point P.

The cutting portion 33 corresponds to the tab seal 18, and the second portion 32 of one side of the cutting portion 33 is adhered to the lower surface of the bottom portion 131. The end of the y-axis direction of the cutting portion 33 is positioned between the positive electrode lead tab 14 and the tab seal 18. Accordingly, the second portion 32 insulates the side end 311 of the bottom portion 131 and the side end 311 of the side wall portion 132, and the tolerance portion of the side end may be further insulated.

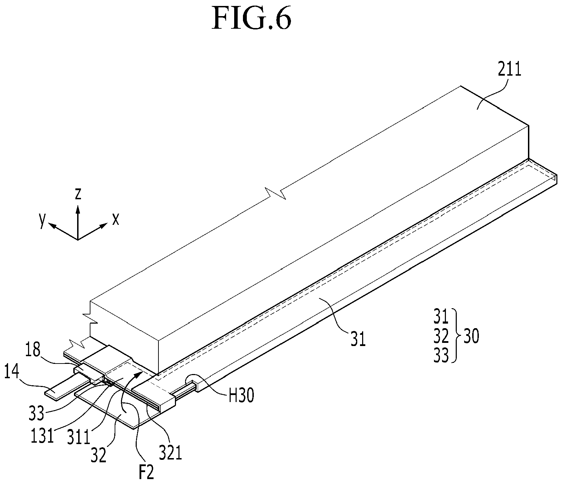

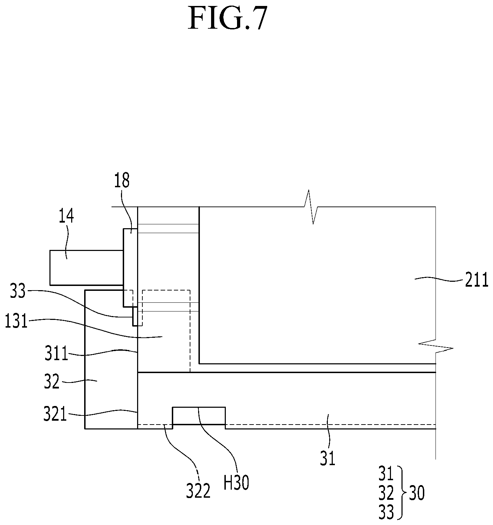

FIG. 6 is a perspective view of a state in which an insulation tape is firstly bent from the pouch type rechargeable battery of FIG. 4 and is secondly adhered, and FIG. 7 is a top plan view of a portion of FIG. 6. Referring to FIG. 6 and FIG. 7, in the state of FIG. 4 and FIG. 5, if the insulation tape 30 is firstly bent (in a direction F1 of FIG. 4), the first portion 31 insulates the side end 121 of the sealing portion 212 and the side end 322 of the side wall portion 132 and is adhered to the other surface (an upper surface) of the sealing portion 212 and the other surface (an upper surface) of the side wall portion 132.

The first portion 31 of the insulation tape 30 insulates the side end 121 of the sealing portion 212 and the side end 322 of the side wall portion 132.

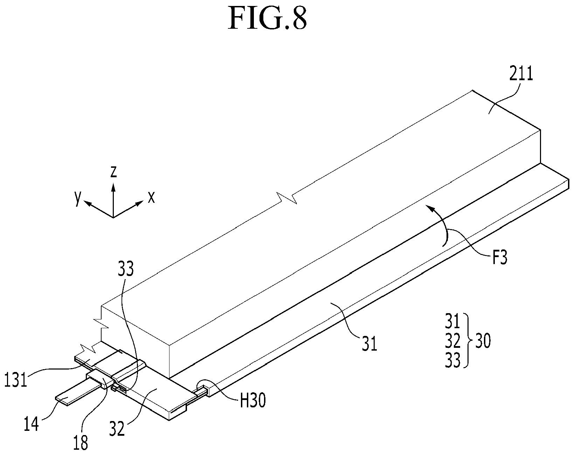

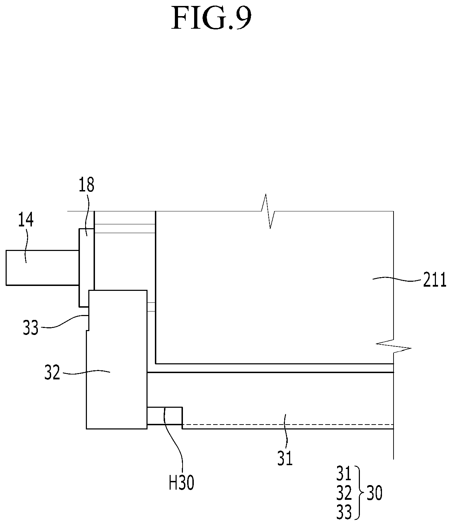

FIG. 8 is a perspective view of a state in which an insulation tape is secondly bent from the pouch type rechargeable battery of FIG. 6 and is thirdly adhered, and FIG. 9 is a top plan view of a portion of FIG. 8. Referring to FIG. 8 and FIG. 9, in the state of FIG. 6 and FIG. 7, if the insulation tape 30 is secondly bent (in a direction F2 of FIG. 6), the second portion 32 insulates the side end 311 of the bottom portion 131 and the side end 321 of the side wall portion 132 and is adhered to the other surface (an upper surface) of the bottom portion 131 and to the other surface (an upper surface) of the side wall portion 132. The second portion 32 is overlapped and adhered at the first portion 31 of the other surface (an upper surface) of the side wall portion 132.

Also, one side of the second portion 32 of the insulation tape 30 is adhered to the tab seal 18 and one surface (a lower surface) of the bottom portion 131 corresponding thereto with reference to the cutting portion 33, and the other side thereof is adhered to the tab seal 18 and the other surface (an upper surface) of the bottom portion 131 corresponding thereto. The end of the y-axis direction of the cutting portion 33 is positioned and adhered between the positive electrode lead tab 14 and the tab seal 18.

The second portion 32 near the cutting portion 33 may completely insulate the side end 311 of the bottom portion 131 at one side of the tab seal 18 in spite of the position tolerance of the tab seal 18. Accordingly, the insulation deterioration may be prevented in one side of the tab seal 18 of the bottom portion 131.

Also, if the sealing portion 212 adhered with the first portion 31 is thirdly bent (in a direction F3 of FIG. 8) and is adhered to the side surface of the cell body 211, the rechargeable battery of FIG. 1 is completed. The second portion 32 of the insulation tape 30 is bent in the boundary of the bottom portion 131 and the side wall portion 132, and the first portion 31 may be adhered to the side surface of the cell body 211 by interposing a double-sided adhesive tape (not shown).

While this invention has been described in connection with certain embodiments, it is to be understood that the invention is not limited to the disclosed embodiments, but, on the contrary, is intended to cover various modifications and equivalent arrangements included within the scope of the appended claims.

**Description of Symbols**

| | |
|---|---|
| 10: electrode assembly | 11: first electrode (positive electrode) |
| 12: second electrode (negative electrode) | 13: separator |
| 14: first lead tab (positive electrode lead tab) | |
| 15: second lead tab (negative electrode lead tab) | |
| 18, 19: tab seals | 20: pouch |
| 21: polymer sheet | 22: nylon sheet |
| 23: metal sheet | 30: insulation tape |
| 31, 32: first, second portions | 33: cutting portion |
| 121, 311, 321, 322: side ends | 131: bottom portion |
| 132: side wall portion | 201, 202: first, second exterior members |
| 211: cell body | 212: sealing portion |
| 213: terrace | CL1, CL2: first, second center line |
| H30: short check hole | P: cross point |

## Claims

1. A rechargeable battery comprising:
an electrode assembly (10);
a pouch (20) forming a sealing portion (212) at a side surface of a cell body receiving the electrode assembly (10) by sealing an outer portion thereof, forming a terrace (213) at the other side surface of the cell body (211), and sealing a lead tab (14, 15) connected to the electrode assembly (10) by a tab seal (18, 19) to draw it out to the terrace (213); and
an insulation tape (30) configured to insulate the sealing portion (212) to be adhered to the cell body (211) and insulating the terrace (213),
wherein the insulation tape (30) includes a cutting portion (33) corresponding to one side of the tab seal (18, 19) and adhered to the tab seal (18, 19) **characterized in that**
one side of one of the tab seals (18, 19) is received in the cutting portion (33).

2. The rechargeable battery of claim 1, wherein the terrace includes
a bottom portion (131) connected to a bottom of the cell body (211), and
a side wall portion (132) bent at the bottom portion (131) and connected to the sealing portion (212) adhered to a side surface of the cell body (211).

3. The rechargeable battery of claim 2, wherein the insulation tape (30) further includes:
a first portion (31) insulating a side end of the sealing portion (212) and a side end of the side wall portion (132), and
a second portion (32) connected vertically to the first portion (31) and insulating the side end of the bottom portion (131) and the other side end of the side wall portion (132).

4. The rechargeable battery of claim 3, wherein
a first center line (CL1) of the first portion (31) accords with the side end of the sealing portion (131),
a second center line (CL2) of the second portion (32) accords with the side end of the bottom portion (131), and
a cross point (P) where the first center line (CL1) and the second center line (CL2) cross with a vertex of the side wall portion (132).

5. The rechargeable battery of claim 4, wherein
the cutting portion (33) is cut according to the second center line (CL2) at one side of the second center line (CL2).

6. The rechargeable battery of claim 5, wherein
a length (L) of the cutting portion is about 1 to 2 times a position tolerance range of the tab seal (18, 19).

7. The rechargeable battery of claim 5 or 6, wherein
the position tolerance range of the tab seal (18, 19) is about ±0.7 mm, and
the length (L) of the cutting portion (33) is about 1 to 1.4 mm.

8. The rechargeable battery of one of claims 4 to 7, wherein
the insulation tape (30) is bent in a first direction thereby insulating the side end of the sealing portion (212) and one side end of the side wall portion (132) by the first portion (31), and is further bent in a second direction thereby insulating the side end of the bottom portion (131) and the other side end of the side wall portion by the second portion (32).

9. The rechargeable battery of claim 8, wherein
the second portion (32) disposes the cutting portion (33) by corresponding to the tab seal (18, 19), and both sides of the cutting portion (33) are adhered to both surfaces of the tab seal (18, 19).

10. The rechargeable battery of claim 9, wherein
the end of the cutting portion (33) is positioned between the lead tab (14, 15) and the tab seal (18, 19).

## Patentansprüche

1. Eine wiederaufladbare Batterie, aufweisend:
eine Elektrodenanordnung (10);
einen Beutel (20), der einen Dichtungsabschnitt (212) auf einer Seitenfläche eines Zellkörpers, der die Elektrodenanordnung (10) aufnimmt, durch Abdichten eines äußeren Abschnitts davon ausbildet, der eine Terrasse (213) auf der anderen Seitenfläche des Zellkörpers (211) ausbildet, und der einen Leitungsstreifen (14, 15), der mit der Elektrodenanordnung (10) verbunden ist, durch eine Streifendichtung (18, 19) abdichtet, um ihn zur Terrasse (213) herauszuziehen; und
ein Isolierband (30), das konfiguriert ist, um den Dichtungsabschnitt (212), der an den Zellkörper (211) geklebt werden soll, zu isolieren, und das die Terrasse (213) isoliert,
wobei das Isolierband (30) einen Schneidabschnitt (33), der einer Seite der Streifendichtung (18, 19) entspricht und an der Streifendichtung (18, 19) angeklebt ist, aufweist, **dadurch gekennzeichnet, dass**
eine Seite einer der Streifendichtungen (18, 19) im Schneidabschnitt (33) aufgenommen ist.

2. Die wiederaufladbare Batterie nach Anspruch 1, wobei die Terrasse aufweist
einen unteren Abschnitt (131), der mit einer Unterseite des Zellkörpers (211) verbunden ist, und
einen Seitenwandabschnitt (132), der am unteren Abschnitt (131) gebogen und mit dem Dichtungsabschnitt (212), der an einer Seitenfläche des Zellkörpers (211) angeklebt ist, verbunden ist.

3. Die wiederaufladbare Batterie nach Anspruch 2, wobei das Isolierband (30) weiterhin aufweist:
einen ersten Abschnitt (31), der ein Seitenende des Dichtungsabschnitts (212) und ein Seitenende des Seitenwandabschnitts (132) isoliert, und
einen zweiten Abschnitt (32), der vertikal mit dem ersten Abschnitt (31) verbunden ist und das Seitenende des unteren Abschnitts (131) und das andere Seitenende des Seitenwandabschnitts (132) isoliert.

4. Die wiederaufladbare Batterie nach Anspruch 3, wobei
eine erste Mittellinie (CL1) des ersten Abschnitts mit dem Seitenende des Dichtungsabschnitts (131) übereinstimmt,
eine zweite Mittellinie (CL2) des zweiten Abschnitts (32) mit dem Seitenende des unteren Abschnitts (131) übereinstimmt, und
ein Kreuzungspunkt (P), an dem sich die erste Mittellinie (CL1) und die zweite Mittellinie (CL2) kreuzen, mit einem Scheitelpunkt des Seitenwandabschnitts (132).

5. Die wiederaufladbare Batterie nach Anspruch 4, wobei
der Schneidabschnitt (33) gemäß der zweiten Mittellinie (CL2) auf einer Seite der zweiten Mittellinie (CL2) ausgeschnitten wird.

6. Die wiederaufladbare Batterie nach Anspruch 5, wobei
eine Länge (L) des Schneidabschnitts etwas das Ein- bis Zweifache eines Positionstoleranzbereichs der Streifendichtung (18, 19) beträgt.

7. Die wiederaufladbare Batterie nach Anspruch 5 oder 6, wobei
der Positionstoleranzbereich der Streifendichtung (18, 19) etwa ±0,7 mm beträgt, und
die Länge (L) des Schneidabschnitts (33) etwa 1 bis 1,4 mm beträgt.

8. Die wiederaufladbare Batterie nach einem der Ansprüche 4 bis 7, wobei
das Isolierband (30) in einer ersten Richtung gebogen ist, so dass es das Seitenende des Dichtungsabschnitts (212) und ein Seitenende des Seitenwandabschnitts (132) durch den ersten Abschnitt (31) isoliert, und weiterhin in einer zweiten Richtung gebogen ist, so dass es das Seitenende des unteren Abschnitts (131) und das andere Seitenende des Seitenwandabschnitts durch den zweiten Abschnitt (32) isoliert.

9. Die wiederaufladbare Batterie nach Anspruch 8, wobei
der zweite Abschnitt (32) den Schneidabschnitt (33) so anordnet, dass er der Streifendichtung (18, 19) entspricht, und beide Seiten des Schneidabschnitts (33) an beiden Seitenflächen der Streifendichtung (18, 19) angeklebt sind.

10. Die wiederaufladbare Batterie nach Anspruch 9, wobei
das Ende des Schneidabschnitts (33) zwischen dem Leitungsstreifen (14, 15) und der Streifendichtung (18, 19) positioniert ist.

## Revendications

1. Batterie rechargeable comprenant :
un ensemble d'électrodes (10) ;
une pochette (20) formant une partie d'étanchéité (212) au niveau d'une surface latérale d'un corps de cellule recevant l'ensemble d'électrodes (10) en assurant l'étanchéité d'une partie externe de celui-ci, formant une terrasse (213) au niveau de l'autre surface latérale du corps de cellule (211), et assurant l'étanchéité d'une languette de connexion (14, 15) reliée à l'ensemble d'électrodes (10) par un joint d'étanchéité de languette (18, 19) pour la tirer vers la terrasse (213) ; et
une bande isolante (30) configurée pour isoler la partie d'étanchéité (212) devant être collée au corps de cellule (211) et isolant la terrasse (213),
où la bande isolante (30) comporte une partie de coupe (33) correspondant à un côté du joint d'étanchéité de languette (18, 19) et collée au joint d'étanchéité de languette (18, 19) **caractérisée en ce que**
un côté de l'un des joints d'étanchéité de languette (18, 19) est reçu dans la partie de coupe (33).

2. Batterie rechargeable de la revendication 1, dans laquelle la terrasse comporte :
une partie inférieure (131) reliée à un fond du corps de cellule (211), et
une partie de paroi latérale (132) pliée au niveau de la partie inférieure (131) et reliée à la partie d'étanchéité (212) collée à une surface latérale du corps de cellule (211).

3. Batterie rechargeable de la revendication 2, dans laquelle la bande isolante (30) comporte en outre :
une première partie (31) isolant une extrémité latérale de la partie d'étanchéité (212) et une extrémité latérale de la partie de paroi latérale (132), et
une deuxième partie (32) reliée verticalement à la première partie (31) et isolant l'extrémité latérale de la partie inférieure (131) et l'autre extrémité latérale de la partie de paroi latérale (132).

4. Batterie rechargeable de la revendication 3, dans laquelle :
une première ligne centrale (CL1) de la première partie (31) concorde avec l'extrémité latérale de la partie d'étanchéité (212),
une deuxième ligne centrale (CL2) de la deuxième partie (32) concorde avec l'extrémité latérale de la partie inférieure (131), et
un point de croisement (P) où la première ligne centrale (CL1) et la deuxième ligne centrale (CL2) se croisent concorde avec un sommet de la partie de paroi latérale (132).

5. Batterie rechargeable de la revendication 4, dans laquelle :
la partie de coupe (33) est découpée selon la deuxième ligne centrale (CL2) au niveau d'un côté de la deuxième ligne centrale (CL2).

6. Batterie rechargeable de la revendication 5, dans laquelle :
une longueur (L) de la partie de coupe est d'environ 1 à 2 fois une plage de tolérance de position du joint d'étanchéité de languette (18, 19).

7. Batterie rechargeable de la revendication 5 ou 6, dans laquelle :
la plage de tolérance de position du joint d'étanchéité de languette (18, 19) est d'environ ± 0,7 mm, et
la longueur (L) de la partie de coupe (33) est d'environ 1 à 1,4 mm.

8. Batterie rechargeable de l'une des revendications 4 à 7, dans laquelle :
la bande isolante (30) est pliée dans une première direction isolant ainsi l'extrémité latérale de la partie d'étanchéité (212) et une extrémité latérale de la partie de paroi latérale (132) par la première partie (31), et est en outre pliée dans une deuxième direction isolant ainsi l'extrémité latérale de la partie inférieure (131) et l'autre extrémité latérale de la partie de paroi latérale par la deuxième partie (32).

9. Batterie rechargeable de la revendication 8, dans laquelle :
la deuxième partie (32) dispose la partie de coupe (33) par correspondance avec le joint d'étanchéité de languette (18, 19), et les deux côtés de la partie de coupe (33) sont collés aux deux surfaces du joint d'étanchéité de languette (18, 19).

10. Batterie rechargeable de la revendication 9, dans laquelle :
l'extrémité de la partie de coupe (33) est positionnée entre la languette de connexion (14, 15) et le joint d'étanchéité de languette (18, 19).
